# EUROPÄISCHE PATENTANMELDUNG

(11) **EP 1 074 604 A2**
(43) Veröffentlichungstag der Anmeldung: **07.02.2001**
(21) Anmeldenummer: 00114474.0
(22) Anmeldetag: 06.07.2000
(51) Int. Cl.: C09K 17/00

(54) **Biologisch abbaubare Bodenlockerungsmittel**

(30) Priorität: 03.08.1999 DE 29913534 U
(71) Anmelder: BASF AKTIENGESELLSCHAFT, 67056 Ludwigshafen (DE)
(72) Erfinder: Braun, Frank, Dr., 67063 Ludwigshafen (DE); Glück, Guiscard, Dr., 55129 Mainz (DE); Hahn, Klaus, Dr., 67281 Kirchheim (DE)

(57) **Zusammenfassung**

Die Erfindung betrifft ein Bodenlockerungsmittel auf Basis von Schaumstoffpartikeln aus biologisch abbaubaren natürlichen oder synthetischen Polymeren, vorzugsweise aus aliphatisch/aromatischen Copolyestern.

## Beschreibung

Die Erfindung betrifft Bodenlockerungsmittel auf Basis von polymeren Schaumstoffpartikeln.

Ein wichtiger Prozeß beim Pflanzenwuchs ist die Bodenatmung, d.h. der gesamte Gaswechsel des Bodens, verursacht durch die Sauerstoff-Aufnahme und Kohlendioxid-Abgabe von Mikroorganismen und unterirdischen Pflanzenteilen. Um einen Gaswechsel im Boden zu ermöglichen, müssen Hohlräume vorhanden sein. Werden die Hohlräume verstopft, z.B. infolge von Bodenverdichtung oder Überschwemmung, kann der Sauerstoff-Gehalt in der Bodenluft sinken und der Kohlendioxid-Gehalt steigen.

Um ein Verstopfen der Hohlräume zu verhindern und das Abfließen von Wasser zu ermöglichen, werden nicht verrottende, polymere Schaumstoffe z.B. aus Polystyrol (Styromull®) eingesetzt. Diese Stoffe haben jedoch den Nachteil, daß sie im Erdreich verbleiben und letztendlich entsorgt werden müssen.

Der Erfindung lag also die Aufgabe zugrunde, Bodenlockerungsmittel bereitzustellen, die diese Nachteile nicht aufweisen.

Gegenstand der Erfindung sind Bodenlockerungsmittel auf Basis von Schaumstoffpartikeln aus biologisch abbaubaren natürlichen oder synthetischen Polymeren oder Mischungen davon.

Geeignete natürliche Polymere sind Polysaccharide, wie Stärke und Cellulose sowie deren Derivate und Mischungen mit synthetischen Polymeren, wie sie z.B. in WO 97/44 388 beschrieben sind, ferner Poly(hydroxycarbonsäuren), wie Polymilchsäure und Polyhydroxybuttersäure, sowie Poly(aminocarbonsäuren), wie Polyasparaginsäure und deren Derivate.

Geeignete synthetische Polymere sind Polyester. Besonders bevorzugt sind aliphatisch/aromatische Copolyester, wie sie z.B. in WO 96/07 687, WO 96/15 173 und WO 97/43 329 beschrieben sind.

Die erfindungsgemäßen Bodenlockerungsmittel werden im Boden durch Mikroorganismen abgebaut. Bei synthetischen Polymeren ist durch die Zusammensetzung die Abbauzeit gezielt einstellbar; sie kann z.B. zwischen 4 und 100 Wochen liegen.

Die Schaumpartikel können jede beliebige Form aufweisen, sie können rund, zylinderförmig oder flockig sein. Ihre Partikelgröße beträgt vorzugsweise 1 bis 20 mm, insbesondere 2 bis 15 mm. Die Schüttdichte kann in weiten Grenzen zwischen 5 und 500 g/l schwanken, bevorzugt ist eine Schüttdichte zwischen 10 und 200 g/l.

Die erfindungsgemäßen Bodenlockerungsmittel können mit üblichen Bodenverbesserungsmitteln, wie Torf und Düngemitteln abgemischt werden. Es ist auch möglich, in die Schaumstoffpartikel einen Wirkstoff, z.B. ein Düngemittel einzuarbeiten, das beim Abbau des Schaumes frei wird.

## Patentansprüche

1. Bodenlockerungsmittel auf Basis von Schaumstoffpartikeln, dadurch gekennzeichnet, daß die Schaumstoffpartikel aus biologisch abbaubaren natürlichen oder synthetischen Polymeren oder Mischungen davon bestehen.

2. Bodenlockerungsmittel nach Anspruch 1, dadurch gekennzeichnet, daß das Polymere Stärke oder Cellulose ist.

3. Bodenlockerungsmittel nach Anspruch 1, dadurch gekennzeichnet, daß das Polymere ein aliphatisch/aromatischer Copolyester ist.

4. Bodenlockerungsmittel nach Anspruch 1, dadurch gekennzeichnet, daß die Schaumstoffpartikel eine Partikelgröße von 1 bis 20 mm haben.

5. Bodenlockerungsmittel nach Anspruch 1, dadurch gekennzeichnet, daß die Schaumstoffpartikel eine Schüttdichte von 5 bis 500 g/l haben.
